# FASCICULE DE BREVET EUROPEEN

(11) **EP 2 861 441 B1**
(45) Date de publication et mention de la délivrance du brevet: **17.08.2016**
(21) Numéro de dépôt: 13733388.6
(22) Date de dépôt: 11.06.2013
(51) Int. Cl.: B60K 1/04, H01M 2/12, H01M 2/10

(54) **VÉHICULE AUTOMOBILE COMPORTANT UN SYSTÈME D'ACCÈS RAPIDE A LA BATTERIE EN CAS D'INCENDIE**
KRAFTFAHRZEUG MIT EINEM SCHNELLEN BATTERIEZUGRIFFSYSTEM ZUR BRANDBEKÄMPFUNG
MOTOR VEHICLE COMPRISING A QUICK ACCES SYSTEM TO THE BATTERY IN CASE OF FIRE

(30) Priorité: 18.06.2012 FR 1255677
(43) Date de publication de la demande: 22.04.2015
(73) Titulaire: Peugeot Citroën Automobiles SA, 78140 Vélizy Villacoublay (FR)
(72) Inventeur: FERIOT, Bertrand, F-91210 Draveil (FR); FLOQUET, Stephane, F-91400 Orsay (FR); DESHAYES, Patrick, F-92250 La Garenne Colombes (FR); GESLIN, David, F-78280 Guyancourt (FR); DURET GEORGE, Celine, F-78950 Gambais (FR); MENABEUF, Gilles, F-90170 Etueffont (FR)
(86) Numéro de dépôt international: PCT/FR2013/051348
(87) Numéro de publication internationale: WO 2013/190216

(56) Documents cités:
- EP-A1- 0 068 837
- DE-A1-102008 059 948
- DE-A1-102009 020 185
- US-A1- 2006 092 631
- US-A1- 2012 111 444

## Description

La présente invention concerne un véhicule automobile, notamment un véhicule électrique ou hybride, comportant un système d'accès rapide à la batterie en cas d'incendie.

### ARRIÈRE-PLAN DE L'INVENTION

On sait que lors de l'incendie d'un véhicule automobile l'échauffement de la batterie peut conduire à une explosion de celle-ci. Ceci est particulièrement vrai pour un véhicule électrique ou un véhicule hybride dans lequel la batterie est de dimension très importante et est apte à délivrer une tension élevée. Par ailleurs, la batterie est généralement très encaissée dans le véhicule car cela permet une meilleure protection en cas de choc sur le véhicule. En particulier sur un véhicule électrique ou hybride la batterie est disposée sous le plancher du véhicule. L'accès des pompiers en cas d'incendie est donc particulièrement difficile.

Certains véhicules comportent un conduit permettant d'injecter de l'eau directement dans la batterie. Toutefois, pour éviter une injection accidentelle d'eau dans la batterie le conduit est fermé par une pièce métallique qui, dans le cas d'une batterie disposée sous le plancher, est fixée sur le plancher avant du véhicule. Pour intervenir, le pompier doit retirer la pièce métallique à l'aide d'un pied de biche et donc s'approcher très près du véhicule. Cette solution n'est donc pas acceptable. DE 102009020185 décrit un véhicule selon le préambule de la revendication 1.

### OBJET DE L'INVENTION

Un but de l'invention et de proposer un moyen pour assurer très rapidement le refroidissement de la batterie dans le cas d'un incendie.

### BRÈVE DESCRIPTION DE L'INVENTION

En vue de la réalisation de ce but, on propose selon l'invention un véhicule automobile, notamment un véhicule électrique ou hybride, équipé d'une batterie disposée dans un compartiment de batterie comprenant une cloison comportant un orifice fermé, par un opercule thermo-fusible recouvert par un revêtement thermo-destructible.

Ainsi, lors d'un incendie l'opercule est automatiquement éliminé et il suffit de diriger la lance d'incendie vers l'orifice du compartiment de batterie pour que celui-ci soit rempli d'eau.

Selon une version avantageuse de l'invention, l'orifice fermé par un opercule thermo-fusible est disposé au-dessus de la batterie. On dispose ainsi de l'effet d'entonnoir formé par les autres éléments du véhicule pour ramener l'eau projetée par la lance d'incendie vers l'orifice du compartiment de batterie.

### BRÈVE DESCRIPTION DES DESSINS

D'autres caractéristiques et avantages de l'invention apparaîtront encore à la lecture de la description qui suit de deux modes de réalisation non limitatifs de l'invention en référence aux figures ci-jointes parmi lesquelles:
- La figure 1 est une vue schématique de côté d'un véhicule selon l'invention,
- la figure 2 est une vue agrandie de l'encadré II de la figure 1 en coupe par un plan vertical,
- la figure 3 une vue agrandie de l'encadré III de la figure 2,
- la figure 4 est une vue analogue à celle de la figure 2 pour un second mode de réalisation de l'invention.

### DESCRIPTION DETAILLÉE DE L'INVENTION

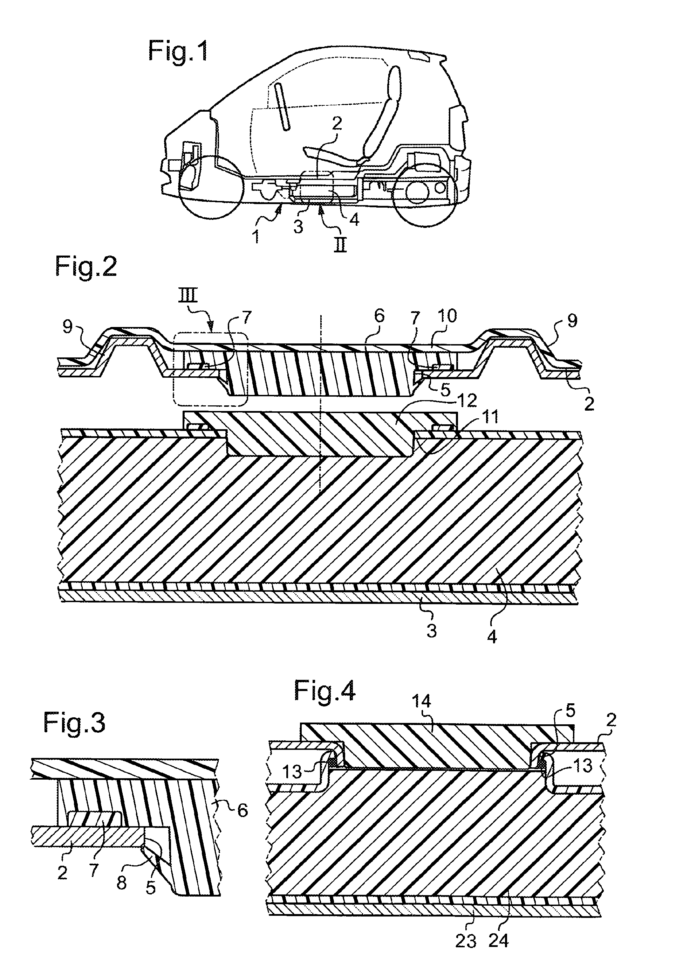

En référence à la figure 1, l'invention va maintenant être décrite en référence à un véhicule électrique comportant de façon connue en soi une caisse 1 comportant un plancher 2 sous lequel est fixé un bac de batterie 3 contenant une batterie 4.

Selon le premier mode de réalisation de l'invention illustré par les figures 2 et 3, le plancher 2 comporte un orifice 5 qui est normalement fermé par un opercule thermo-fusible 6. Comme illustré par la figure 3, l'opercule 6 comporte un joint annulaire thermo-fusible 7. L'opercule 6 est de préférence monté sur le plancher 2 avant la mise en place de celui-ci dans le véhicule. A cet effet l'opercule 6 comporte un clip 8 qui s'escamote lors de la mise en place de l'opercule 6 dans l'orifice 5 et maintient l'opercule 6 en place pendant sa fixation par chauffage et mise en pression du joint thermo-fusible 7.

Afin de protéger l'opercule contre un arrachement, le plancher 2 comporte sur sa face supérieure, c'est-à-dire la face opposée à la batterie, un relief annulaire 9 qui entoure l'opercule thermo-fusible. Dans l'exemple illustré, le relief 9 est réalisé par un emboutissage du plancher 4 préalablement à la pose de l'opercule 6.

Bien que l'étanchéité soit assurée par le joint 7, le plancher est de préférence recouvert d'un revêtement étanche 10, de préférence thermo-destructible afin de ne pas gêner l'accès au compartiment de batterie lorsque l'opercule 6 a été éliminé sous l'effet de la chaleur.

Dans ce premier mode de réalisation, la batterie 4 comporte également un orifice 11, disposé à l'aplomb de l'orifice 5 et normalement fermé par un opercule thermo-fusible 12.

En cas d'incendie le revêtement 10 et l'opercule 6 sont détruits et il est donc possible de noyer la batterie en projetant simplement de l'eau dans l'habitacle, après avoir cassé une vitre. Si l'incendie est déjà avancé lors de l'intervention des pompiers, l'opercule 12 de la batterie est également fondu et l'eau pénètre alors directement dans la batterie pour noyer celle-ci.

La figure 4 illustre un second mode de réalisation dans lequel une batterie 24, portée par un bac de batterie 23 est accolée au plancher 2 et comporte un orifice 13 qui coïncide avec l'orifice 5 dans le plancher. Les deux orifices sont alors fermés par un opercule commun 14.

Bien entendu l'invention n'est pas limitée aux modes de réalisation décrits et on peut y apporter des variantes de réalisation sans sortir du cadre de l'invention telle que définie par les revendications.

En particulier, bien que l'invention ait été décrite en relation avec un véhicule électrique, elle s'applique à tous les véhicules.

Bien que l'invention ait été décrite en relation avec un orifice réalisé dans le plancher, c'est-à-dire au-dessus de la batterie, on pourrait réaliser l'orifice sur un côté du compartiment de batterie directement accessible depuis l'extérieur de sorte que les pompiers pourront remplir le compartiment de batterie avec de l'eau sans avoir à s'approcher du véhicule.

Bien que l'invention ait été décrite en relation avec un revêtement simplement étanche, on peut la réaliser avec un revêtement multicouche comprenant, par exemple une couche d'isolant phonique. En lieu et place d'un relief entourant l'orifice on peut également prévoir un capuchon ajouré recouvrant l'opercule

## Revendications

1. Véhicule automobile, notamment véhicule électrique ou hybride, équipé d'une batterie (4 ;24) disposée dans un compartiment de batterie (3 ; 23), le compartiment de batterie comprenant une cloison (2) comportant un orifice (5) fermé par un opercule (6 ;14) thermo-fusible, **caractérisé en ce que** l'opercule est recouvert par un revêtement (10) thermo-destructible.

2. Véhicule automobile selon la revendication 1 **caractérisé en ce que** l'orifice (5) fermé par un opercule thermo-fusible est disposé au-dessus de la batterie (4 ; 24).

3. Véhicule automobile selon la revendication 2 **caractérisé en ce que** la batterie (4) comporte un orifice (11) fermé par un opercule thermo-fusible (12).

4. Véhicule automobile selon la revendication 3 **caractérisé en ce que** l'orifice (5) fermé par un opercule thermo-fusible (6) du compartiment de batterie est disposé à l'aplomb de l'orifice (11) fermé par un opercule thermo-fusible (12) de la batterie.

5. Véhicule automobile selon la revendication 2 **caractérisé en ce que** la batterie (24) comporte un orifice (13) qui coïncide avec l'orifice (5) du compartiment de batterie, et **en ce que** les orifices en coïncidence sont fermés par un opercule commun (14).

6. Véhicule automobile selon la revendication 1 **caractérisé en ce que** le revêtement (10) est étanche.

7. Véhicule automobile selon la revendication 1 **caractérisé en ce que** l'opercule thermo-fusible (6) est fixé sur la cloison par un joint thermo-fusible (7).

8. Véhicule automobile selon la revendication 1 **caractérisé en ce que** sur une face opposée à la batterie, la cloison comporte un relief (9) entourant l'opercule thermo-fusible (6).

9. Véhicule automobile selon la revendication 8 **caractérisé en ce que** le relief (9) est formé par un emboutissage de la cloison.

## Patentansprüche

1. Kraftfahrzeug, insbesondere Elektro- oder Hybridfahrzeug, das mit einer Batterie (4; 24) ausgestattet ist, die in einem Batteriefach (3; 23) angeordnet ist, wobei das Batteriefach eine Wand (2) umfasst, die eine Öffnung (5) umfasst, die durch einen wärmeschmelzbaren Verschluss (6; 14) verschlossen ist, **dadurch gekennzeichnet, dass** der Verschluss mit einer durch Wärme zerstörbaren Beschichtung (10) bedeckt ist.

2. Kraftfahrzeug nach Anspruch 1, **dadurch gekennzeichnet, dass** die Öffnung (5), die durch einen wärmeschmelzbaren Verschluss verschlossen ist, oberhalb der Batterie (4; 24) angeordnet ist.

3. Kraftfahrzeug nach Anspruch 2, **dadurch gekennzeichnet, dass** die Batterie (4) eine Öffnung (11) umfasst, die durch einen wärmeschmelzbaren Verschluss (12) verschlossen ist.

4. Kraftfahrzeug nach Anspruch 3, **dadurch gekennzeichnet, dass** die Öffnung (5), die durch einen wärmeschmelzbaren Verschluss (6) des Batteriefachs verschlossen ist, in der Senkrechten zu der Öffnung (11), die durch einen wärmeschmelzbaren Verschluss (12) der Batterie verschlossen ist, angeordnet ist.

5. Kraftfahrzeug nach Anspruch 2, **dadurch gekennzeichnet, dass** die Batterie (24) eine Öffnung (13) umfasst, die mit der Öffnung (5) des Batteriefachs zusammenfällt, und dass die zusammenfallenden Öffnungen durch einen gemeinsamen Verschluss (14) verschlossen sind.

6. Kraftfahrzeug nach Anspruch 1, **dadurch gekennzeichnet, dass** die Beschichtung (10) dicht ist.

7. Kraftfahrzeug nach Anspruch 1, **dadurch gekennzeichnet, dass** der wärmeschmelzbare Verschluss (6) an der Wand durch eine wärmeschmelzbare Dichtung (7) befestigt ist.

8. Kraftfahrzeug nach Anspruch 1, **dadurch gekennzeichnet, dass** die Wand auf einer der Batterie entgegengesetzten Seite ein Relief (9) umfasst, das den wärmeschmelzbaren Verschluss (6) umgibt.

9. Kraftfahrzeug nach Anspruch 8, **dadurch gekennzeichnet, dass** das Relief (9) durch ein Stanzen der Wand gebildet ist.

## Claims

1. A motor vehicle, especially an electric or hybrid vehicle, that has a battery (4; 24) arranged in a battery compartment (3; 23), the battery compartment including a partition (2) comprising an opening (5) closed by a thermofusible cover (6; 14), **characterized in that** the cover is covered by a heat-disruptable coating (10).

2. The motor vehicle according to Claim 1, **characterized in that** the opening (5) closed by a thermofusible cover is arranged above the battery (4; 24).

3. The motor vehicle according to Claim 2, **characterized in that** the battery (4) comprises an opening (11) closed by a thermofusible cover (12).

4. The motor vehicle according to Claim 3, **characterized in that** the opening (5) closed by a thermofusible cover (6) of the battery compartment is arranged plumb with the opening (11) closed by a thermofusible cover (12) of the battery.

5. The motor vehicle according to Claim 2, **characterized in that** the battery (24) comprises an opening (13) which coincides with the opening (5) of the battery compartment, and **in that** the coinciding openings are closed by a common cover (14).

6. The motor vehicle according to Claim 1, **characterized in that** the coating (10) is sealed.

7. The motor vehicle according to Claim 1, **characterized in that** the thermofusible cover (6) is fixed on the partition by a thermofusible joint (7).

8. The motor vehicle according to Claim 1, **characterized in that** on a face opposed to the battery, the partition comprises a relief (9) surrounding the thermofusible cover (6).

9. The motor vehicle according to Claim 8, **characterized in that** the relief (9) is formed by a stamping of the partition.
